# EUROPÄISCHE PATENTANMELDUNG

(11) **EP 1 158 550 A2**
(43) Veröffentlichungstag der Anmeldung: **28.11.2001**
(21) Anmeldenummer: 01106692.5
(22) Anmeldetag: 16.03.2001
(51) Int. Cl.: H01G 4/38

(54) **Kondensator und Verfahren zur Herstellung des Kondensators**

(30) Priorität: 26.05.2000 DE 10026259
(71) Anmelder: EPCOS AG, 81541 München (DE)
(72) Erfinder: Vetter, Harald, 89520 Heidenheim (DE)
(74) Vertreter: Epping Hermann & Fischer

(57) **Zusammenfassung**

Die Erfindung betrifft einen elektrischen Kondensator mit einem Schichtstapel aus übereinanderliegenden Elektrodenschichten (1) und Isolierschichten (2). Der Schichtstapel kann entweder ein Rundwickel, ein Flachwickel oder ein Schichtwickel sein. Jeweils zwei Seitenflächen (4, 5) des Schichtstapels sind mit einer Schoopschicht versehen, deren Poren feuchtedicht verschlossen sind. Der Schichtstapel weist ferner mindestens eine Deckfläche auf. Der deckflächenseitige Teilkondensator (C₁) hat eine wesentlich geringere Kapazität als die parallel dazu geschalteten Teilkondensatoren (C₂) im Innern des Schichtstapels. Des weiteren sind gegebenenfalls zwei weitere Seitenflächen (7, 8) des Schichtstapels als feuchtehemmende Randschicht (9) ausgebildet, die aus zu einer Randschicht (9) vereinten Isolierschichten (2) besteht. Ferner betrifft die Erfindung ein Verfahren zur Herstellung des Kondensators mit Hilfe des Sägeschmelzverfahrens. Die Erfindung hat den Vorteil, daß ein feuchtebeständiger Kondensator ohne aufwendige Metallumhüllung bereitgestellt wird.

## Beschreibung

### Kondensator und Verfahren zur Herstellung des Kondensators

Die Erfindung betrifft einen Kondensator mit einem Schichtstapel aus Isolier- und Elektrodenschichten. Ferner betrifft die Erfindung ein Verfahren zur Herstellung des Kondensators.

Es sind Kondensatoren der eingangs genannten Art bekannt, bei denen der Schichtstapel eine Grund- und eine Deckfläche sowie vier Seitenflächen aufweist. Unter einem Schichtstapel sind übereinandergestapelte Schichten zu verstehen. Vorzugsweise handelt es sich dabei um einen quaderförmigen Schichtstapel (sog. Schichtwickel). Es werden aber auch Rundwickel und Flachwickel betrachtet.

Die Isolierschichten der bekannten Kondensatoren sind vorzugsweise aus Polyester gebildet. Die Elektrodenschichten können beispielsweise Legierungen mit Aluminium oder reine Aluminium-Metallisierungen der Isolierschichten sein. Die bekannten Kondensatoren weisen auf zwei gegenüberliegenden Seitenflächen gesprühte Metallschichten auf, die der Kontaktierung der Elektrodenschichten dienen und dem Fachmann als Schoopschichten bekannt sind.

Die bekannten Kondensatoren werden üblicherweise in feuchtehaltiger Umgebungsatmosphäre betrieben. Die Feuchte kann von der Umgebung in das Innere des Schichtstapels eindringen und beispielsweise durch Korrosion der Elektrodenschichten die Kapazität des Kondensators im Laufe der Zeit verringern. Solche mit der Zeit fortschreitende Kapazitätsverringerungen sind bei Kondensatoren unerwünscht, da sie die Bauteileigenschaften ungünstig beeinflussen und schlimmstenfalls sogar zu einem Totalausfall des Kondensators führen können.

Für die Diffusion der Feuchte von der Umgebung in das Innere des Schichtstapels stehen in der Hauptsache drei Möglichkeiten zur Verfügung:

Erstens kann die Feuchte über die Schoopschichten, die porös und dadurch feuchtedurchlässig sind, in den Schichtstapel eindringen.

Bei Schichtwickeln besteht ein zweiter Feuchtediffusionsweg senkrecht zur Deck- bzw. Grundfläche des Schichtstapels. Da die Feuchte langsam von außen nach innen in den Schichtstapel eindringt, werden die von den deckflächen- bzw. grundflächenseitigen Elektrodenschichten gebildeten Teilkondensatoren des Schichtstapels als erste durch Korrosion zerstört.

Drittens kann die Feuchte parallel zu den Isolier- bzw. Elektrodenschichten senkrecht zu den beiden nicht von Schoopschichten bedeckten Seitenflächen des Schichtstapels eindringen.

Es wurde erkannt, daß Metallschichten gut als Feuchtediffusionssperren geeignet sind. Daher wird bei bekannten Kondensatoren die Feuchtestabilität durch Umhüllen des Schichtstapels mit einem metallischen Gehäuse erhöht. Dieses metallische Gehäuse kann beispielsweise als Metallbecher aus Aluminium ausgebildet sein.

Die von einem Metallgehäuse umhüllten Kondensatoren haben den Nachteil, daß sie aufgrund des zu bearbeitenden Metalls teuer im Material und aufwendig in der Herstellung sind. Ferner haben sie den Nachteil, daß das Metallgehäuse relativ viel Platz beansprucht, wodurch die pro Volumen nutzbare Kondensatorkapazität sinkt, was dem Fachmann als schlechte Volumenausnutzung bekannt ist. Darüber hinaus haben sie den Nachteil, daß u. U. kurze Kriechstrecken und Luftstrecken zwischen dem Gehäuse und den Anschlüssen zu beachten sind.

Ziel der vorliegenden Erfindung ist es daher, einen Kondensator bereitzustellen, dessen Kapazität nicht wesentlich durch das Eindringen von Feuchte verändert wird, und der platzsparend und billig herzustellen ist.

Dieses Ziel wird erfindungsgemäß durch einen Kondensator nach Anspruch 1, 2 oder 3 erreicht. Vorteilhafte Ausgestaltungen der Erfindung und ein Verfahren zur Herstellung der Erfindung sind den weiteren Ansprüchen zu entnehmen.

Die Erfindung gibt einen Kondensator mit einem Schichtstapel an, der aus übereinander liegenden Elektrodenschichten und Isolatorschichten besteht. Diese Elektrodenschichten und Isolierschichten sind wenigstens in einem Teilbereich - vorzugsweise abwechselnd - übereinander geschichtet. Der Schichtstapel weist eine Deckfläche und Seitenflächen auf. Vorzugsweise handelt es sich bei dem Schichtstapel um einen Rundwickel oder einen Schichtwickel. Zudem kommt auch ein flachgedrückter Rundwickel (= Flachwickel) als Schichtstapel in Betracht. Für den Fall des Rundwickels hat der Schichtstapel die Form eines Zylinders mit einer gekrümmten Deckfläche und zwei kreisförmigen Seitenflächen. Für den Fall eines Schichtwikkels hat der Schichtstapel vorzugsweise die Form eines Quaders mit einer Grund-, einer Deck- und vier Seitenflächen. Für den Fall des Flachwickels hat der Schichtstapel die Form einer Säule mit einer gekrümmten Deckfläche und zwei ovalen Seitenflächen.

Auf wenigstens einer Seitenfläche des Schichtstapels ist zur Kontaktierung der Elektrodenschichten eine poröse Metallschicht (z.B. eine Schoopschicht) aufgebracht. Vorzugsweise wird bei dem Kondensator auf zwei gegenüberliegenden Seitenflächen je eine Metallschicht aufgebracht, die je eine unterschiedliche von zwei direkt übereinanderliegenden Elektrodenschichten kontaktieren, und die ihrerseits mit den Kondensatoranschlüssen kontaktiert sind. Die Poren dieser Metallschicht sind nun so verschlossen, daß die Metallschicht dicht gegenüber Feuchte gemacht ist.

Der Kondensator hat den Vorteil, daß durch das erfindungsgemäße Verschließen.der Poren der Metallschicht das Eindringen von Feuchte durch die Metallschicht weitgehend verhindert wird. Dadurch wird die Korrosion von Elektrodenschichten reduziert bzw. die Feuchtestabilität des Kondensators deutlich verbessert.

Es ist besonders vorteilhaft, erfindungsgemäß die Metallschicht vollflächig mit einer Lotschicht zu versehen (z.B. durch Schwallbadlöten oder auch Reiblöten, jeweils mit oder ohne Schutzgas). Eine solche Lotschicht hat den Vorteil, daß die Poren der Metallschicht wirksam verschlossen werden, wodurch keine Feuchte mehr durch die Metallschicht in das Innere des Schichtstapels eindringen kann.

Darüber hinaus hat die erfindungsgemäße vollflächige Lotschicht den Vorteil, daß auf eine weitere partielle Vorverzinnung der Metallschicht, die zum Anlöten von Kondensatoranschlüssen notwendig wäre, verzichtet werden kann.

Weiterhin hat eine vollflächige Lotschicht gegenüber einer partiellen Vorverzinnung der Metallschicht den Vorteil, daß die Metallschicht ganzflächig mit einer einen äußerst geringen ohmschen Widerstand aufweisenden und den Kontakt zwischen den Kondensatoranschlüssen und den einzelnen Elektrodenschichten des Kondensators herstellenden Schicht versehen ist, wodurch der Wirkwiderstand des Kondensators verringert wird. Dadurch entstehen im Kondensator weniger ohmsche Verluste.

Ferner ist ein Kondensator besonders vorteilhaft, bei dem die Metallschicht durch Walzen oder Reiben bearbeitet ist. Auch durch ein solches Bearbeiten der Metallschicht ist ein wirksames Verschließen der Poren der Metallschicht möglich. Ferner hat diese Vorgehensweise den Vorteil, daß auf eine vollflächige Lotschicht auf der Metallschicht und den damit verbundenen Materialeinsatz verzichtet werden kann. Darüber hinaus ermöglicht das Walzen bzw. Reiben der Metallschicht, wie im Übrigen auch die Reiblötung, die Kalibrierung ihrer Dicke auf einen vorgegebenen Wert.

Darüber hinaus ist ein Kondensator besonders vorteilhaft, bei dem die Metallschicht unter Einwirkung von Hitze gewalzt oder gerieben ist. Durch das Einwirken von Hitze wird die Metallschicht etwas aufgeweicht bzw. die Metallatome der Metallschicht sind leichter verschiebbar, wodurch das Verschließen der Poren noch besser möglich ist.

Ferner ist ein Kondensator besonders vorteilhaft, bei dem entweder die auf der Metallschicht vorgesehene vollflächige Lotschicht oder die feuchtedichte Metallschicht selbst ein Imprägniermittel im Innern des Kondensators einschließt. Ein solcher Kondensator hat den Vorteil, daß das Imprägniermittel aufgrund seiner feuchteabstoßenden Wirkung für eine weitere Reduktion der Feuchteempfindlichkeit des Kondensators sorgt.

Als Imprägniermittel kommt beispielsweise N₂ oder auch eine Flüssigkeit (z.B. Öl) oder ein Feststoff (z.B. Wachs) in Betracht.

Es ist ein Kondensator besonders vorteilhaft, bei dem die Isolierschichten beständig sind gegenüber den beim Verschließen der Poren der Metallschicht auftretenden Temperaturen. Hohe Temperaturen können beispielsweise auftreten beim Schwallöten oder Reiblöten der Lotschicht oder beim Glattwalzen bzw. Glattreiben der Metallschicht unter Einwirkung von Hitze.

Als hitzebeständige Isolierschichten für den erfindungsgemäßen Kondensator kommen Polymerfolien, insbesondere aus folgenden Materialien in Betracht: Polyethylenterephthalat, Polypropylenesulfid, Syndiotactic Polystyrene, thermisch stabilisiertes Polypropylene, Polyphenylene Sulfid oder Cycloolefine Copolymers.

Diese beispielhaft genannten Polymerfolien haben den Vorteil, daß sie leicht verfügbar und billig in der Herstellung sind.

Ferner gibt die Erfindung einen Kondensator mit einem Schichtstapel an, der aus parallel geschalteten, übereinander liegenden Teilkondensatoren besteht. Die Teilkondensatoren bestehen ihrerseits aus durch eine Isolierschicht voneinander getrennten Elektrodenschichten. Der Schichtstapel weist eine Deckfläche und Seitenflächen auf. Es kann sich bei dem Schichtstapel sowohl um einen Rundwickel als auch um einen Schichtwickel handeln. Daneben kommt auch ein flachgedrückter Rundwickel (Flachwickel) als Schichtstapel in Betracht.

Für den Fall des Rundwickels bzw. Flachwickels hat der Schichtstapel die Form eines Zylinders mit einer gekrümmten Deckfläche und zwei kreisförmigen Seitenflächen. Für den Fall eines Schichtwickels hat der Schichtstapel vorzugsweise die Form eines Quaders mit einer Grund-, einer Deck- und vier Seitenflächen.

In allen Fällen weist der jeweils deckflächenseitige Teilkondensator des Schichtstapels einen wenigstens zweimal größeren Abstand seiner Elektrodenschichten auf als ein Teilkondensator im Inneren des Schichtstapels. Für den Fall eines Schichtwickels ist es vorteilhaft, wenn auch der grundflächenseitige Teilkondensator entsprechend dem deckflächenseitigen Teilkondensator einen größeren Elektrodenabstand aufweist.

Der erfindungsgemäße Kondensator hat den Vorteil, daß der deckflächenseitige Teilkondensator aufgrund des größeren Abstands seiner Elektrodenschichten nur einen sehr geringen Beitrag zur Gesamtkapazität des Kondensators liefert. Wird nun die Kapazität des deckflächenseitigen Teilkondensators durch das Eindringen von Feuchte von der Deckflächenseite her abgebaut, so bleibt doch der weitaus größte Teil der Kondensatorkapazität erhalten. Dadurch weist der erfindungsgemäße Kondensator eine geringere Feuchteempfindlichkeit auf.

Des weiteren wird der Weg, den die Feuchte bei ihrer Diffusion von der Deckfläche des Schichtstapels ins Innere des Schichtstapels wandern muß, durch die einander überlappenden Elektrodenschichten des deckflächenseitigen Teilkondensators verlängert. Die Feuchte muß somit einen längeren Weg zurücklegen, bis sie im Innern des Schichtstapels, wo die dicht gepackten Teilkondensatoren mit großer Kapazität sitzen und wo sie demnach erheblichen Schaden anrichten kann, angelangt ist.

Des weiteren ist ein solcher Kondensator besonders vorteilhaft, bei dem die Isolierschicht des deckflächenseitigen Teilkondensators wenigstens zweimal so dick ist wie die Isolierschicht eines Teilkondensators im Innern des Schichtstapels. Dadurch kann besonders einfach eine Verringerung der Kapazität des deckflächenseitigen Kondensators erreicht werden.

Eine Reduktion der Kapazität des deckflächenseitigen Teilkondensators erreicht man auch vorteilhafterweise dadurch, daß man zwischen den Elektrodenschichten des deckflächenseitigen Teilkondensators mehrere Isolierschichten anordnet. Auf diese Weise gelangt man zu einem Kondensator, bei dem erfindungsgemäß die Elektrodenschichten des deckflächenseitigen Teilkondensators durch mehrere Isolierschichten voneinander getrennt sind.

Eine dickere Isolierschicht für den deckflächenseitigen Teilkondensator erreicht man in einfacher und besonders vorteilhafter Weise dadurch, daß man den deckflächenseitigen Teilkondensator als geklebten Verbund aus Kunststoff- und Metallfolie ausführt. Ein solcher Verbund ist käuflich erhältlich und kann leicht in einen, beispielsweise als Rundwickel ausgeführten, Schichtstapel integriert werden.

Des weiteren ist ein Kondensator besonders vorteilhaft, bei dem die Isolierschichten als metallisierte Kunststoffschichten ausgeführt sind. In Betracht kommen hier insbesondere einseitig metallisierte Isolierschichten, die bei der Herstellung eines Wickels einfach auf einen Wickeldorn aufgewikkelt werden können, ohne daß eine weitere Isolierschicht zwischen zwei aufeinanderfallende Metallschichten angeordnet werden müßte, wie es bei einer doppelseitig metallisierten Isolierschicht der Fall wäre. Für die Metallisierung der Kunststoffschichten kommt insbesondere Aluminium oder eine Legierung aus Aluminium und Zink in Betracht.

Eine verringerte Kapazität des deckflächenseitigen Teilkondensators wird bei Verwendung von metallisierten Kunststoffschichten erfindungsgemäß dadurch erreicht, daß zwischen den Elektrodenschichten des deckflächenseitigen Teilkondensators mehrere entmetallisierte Isolierschichten angeordnet werden. Solche entmetallisierte Isolierschichten können in besonders einfacher und vorteilhafter Weise aus metallisierten Kunststoffschichten durch Funkenerosion oder Laserverdampfen hergestellt sein.

Die genannten Verfahren zur Entmetallisierung von metallisierten Kunststoffschichten haben den Vorteil, daß sie auch in einem kontinuierlichen Herstellungsprozeß des erfindungsgemäßen Kondensators, der beispielsweise das Aufwickeln eines Bandes auf einen Wickeldorn umfaßt, eingesetzt werden können.

Wie bereits weiter oben erläutert wurde, hat ein Kapazitätsabbau des deckflächenseitigen Teilkondensators aufgrund seines geringen Beitrags zur Gesamtkapazität des Kondensators nur einen geringen Einfluß auf den Kondensator. Allerdings ist eine weitere Verbesserung der Feuchteempfindlichkeit des erfindungsgemäßen Kondensators dadurch zu erreichen, daß zwischen der Deckfläche des Schichtstapels und dem deckflächenseitigen Teilkondensator weitere entmetallisierte Isolierschichten angeordnet werden.

Dieses Anordnen von weiteren Isolierschichten hat den Vorteil, daß die von außen kommende Feuchte erst diese Schichten durchqueren muß, bevor sie am deckflächenseitigen Teilkondensator ankommt, von wo aus sie die Teilkondensatoren mit großer Kapazität erreicht, wodurch die Feuchtestabilität des Kondensators weiter verbessert wird.

Die Erfindung gibt darüber hinaus einen Kondensator mit einem Schichtstapel an, der aus übereinanderliegenden Elektrodenschichten und Isolierschichten besteht, und der eine Deckfläche und Seitenflächen aufweist. Es kann sich bei dem Schichtstapel vorzugsweise um einen Rundwickel oder um einen Schichtwickel handeln. Zudem kommt auch ein flachgedrückter Rundwickel (= Flachwickel) als Schichtstapel in Betracht.

Für den Fall des Rundwickels hat der Schichtstapel die Form eines Zylinders mit einer gekrümmten Deckfläche und zwei kreisförmigen Seitenflächen. Für den Fall eines Schichtwikkels hat der Schichtstapel vorzugsweise die Form eines Quaders mit einer Grund-, einer Deck- und vier Seitenflächen.

Die Isolierschichten des Schichtstapels sind entlang einer Seitenfläche zu einer gemeinsamen feuchtehemmenden Randschicht vereint. Dieser Kondensator hat demnach den Vorteil, daß durch das erfindungsgemäße Vereinen der Isolierschichten zu einer feuchtehemmenden Randschicht das Eindringen der Feuchte über diese Randschicht in das Innere des Schichtstapels erheblich erschwert wird, wodurch die Feuchtestabilität des Kondensators verbessert wird.

Das Vereinen der Isolierschichten zu einer gemeinsamen feuchtehemmenden Randschicht kann besonders vorteilhaft durch Verschmelzen der Isolierschichten erfolgen. Das Verschmelzen der Isolierschichten hat den Vorteil, daß es einfach durchzuführen ist und daß die resultierende Randschicht durch völlige Neuanordnung der während des Verschmelzens frei beweglichen Atome bzw. Moleküle der Isolierschichten eine ausreichende Feuchteundurchlässigkeit aufweist.

Ferner ist ein Kondensator besonders vorteilhaft, bei dem die Isolierschichten metallisierte Kunststoffschichten sind, die im Bereich der Randschicht entmetallisiert sind. Ein solcher Kondensator hat den Vorteil, daß die durch die Metallisierung auf den Kunststoffschichten gebildeten Elektroden nicht mehr ganz bis an die Randschicht geführt sind, wodurch sich der Weg für zwischen zwei benachbarten Elektrodenschichten fließende Kriechströme deutlich verlängert. Dadurch wird eine verbesserte Spannungsfestigkeit für den Kondensator erreicht.

Eine solche feuchtehemmende, aus entmetallisierten Kunststoffschichten gebildete Randschicht kann vorteilhafterweise zwischen 5 mm und 15 mm breit sein. Eine solche Abmessung genügt für eine gute Feuchteundurchlässigkeit und benötigt nicht einen zu großen Anteil der Elektrodenschichten, wodurch die Kapazität eines Kondensators, dessen Elektrodenschicht beispielsweise eine Länge von 300 mm beträgt, nicht allzusehr verringert wird.

Die entmetallisierten Isolierschichten können besonders einfach und vorteilhaft durch Funkenerosion oder Laserverdampfen aus metallisierten Kunststoffschichten hergestellt sein. Die genannten Verfahren zur Entmetallisierung von metallisierten Kunststoffschichten haben den Vorteil, daß sie auch in einem kontinuierlichen Herstellungsprozeß des erfindungsgemäßen Kondensators, beispielsweise durch Aufwickeln eines Bandes auf einen Wickeldorn, eingesetzt werden können.

Die Feuchtebeständigkeit eines jeden der oben beschriebenen Kondensatoren kann noch weiter verbessert werden, indem erfindungsgemäß eine Seitenfläche des Schichtstapels von einer feuchtehemmenden Schutzkappe abgedeckt wird. Eine solche feuchtehemmende Schutzkappe hat den Vorteil, daß sie zusätzlich das Eindringen von Feuchtigkeit in das Innere des Schichtstapels erschwert.

Da Metalle in besonderer Weise feuchteundurchlässig sind, ist es besonders vorteilhaft, die Schutzkappe mit einer Metallschicht zu versehen. Eine solche Metallschicht kann beispielsweise aus Aluminium bestehen. Durch die Metallschicht wird die Feuchteundurchlässigkeit der Schutzkappe und damit die Feuchtestabilität des Kondensators noch weiter verbessert.

Darüber hinaus ist ein Kondensator besonders vorteilhaft, bei dem die Schutzkappe ein Verbund aus Kunststoff- und Metallfolien ist. Eine solche Schutzkappe hat den Vorteil, daß der Verbund leicht und billig hergestellt bzw. eingekauft werden kann. Ferner hat eine solche Schutzkappe den Vorteil, daß ein Folienverbund auch besonders leicht mehrlagig ausgeführt sein kann, wodurch die Metallschicht mehrfach wirksam wird.

Des weiteren ist es besonders vorteilhaft, die Schutzkappe für den erfindungsgemäßen Kondensator aus mehreren übereinander liegenden Schutzschichten aufzubauen, die versetzt gegeneinander angeordnet sind. Durch das versetzte Anordnen von übereinanderliegenden Feuchteschutzschichten wird ein besonders langer Diffusionsweg für von außen in das Innere des Kondensators eindringende Feuchte vorgesehen.

Des weiteren ist ein Kondensator besonders vorteilhaft, bei dem zwischen der Schutzkappe und der durch die Schutzkappe abgedeckten Seitenfläche ein feuchteadsorbierendes Material angeordnet ist. Ein solcher Kondensator hat den Vorteil, daß das feuchteadsorbierende Material die trotz aller Schutzmaßnahmen in den Kondensator eindringende Restfeuchte dauerhaft bindet, wodurch eine Korrosion der Elektrodenschichten weitgehend vermieden werden kann. Dadurch wird die Feuchtestabilität des Kondensators verbessert.

Ein geeignetes feuchteadsorbierendes Material kann besonders vorteilhaft aus Zeolithen (Molekularsiebgranulat) bestehen. Zeolithe haben den Vorteil, daß sie leicht verfügbar sind, und daß der ihre Struktur bestimmende Gitterabstand variabel bei der Herstellung eingestellt werden kann. Es kommen daher insbesondere Zeolithe in Betracht, deren Gitterabstand so eingestellt ist, daß die Zeolithe optimal zum Aufsaugen und Halten von Luftfeuchtigkeit geeignet sind. Ein solches Granulat ist als Feststoff besonders leicht zwischen Schutzkappe und Seitenfläche anzuordnen, ohne daß dafür weiterer besonderer Aufwand getrieben werden müßte.

Es ist darüber hinaus ein Kondensator besonders vorteilhaft, bei dem der Effekt des feuchteadsorbierenden Materials dadurch optimiert ist, daß das Material in seiner Menge so bemessen ist, daß es der zu erwartenden, im Laufe der Lebensdauer des Kondensators in den Kondensator eindringenden Feuchte entspricht. Dadurch ist die bemessene Menge des Materials dazu geeignet, diese zu erwartende Feuchte in ihrem Innern einzulagern.

Ein solcher Kondensator hat den Vorteil, daß die Menge des feuchteadsorbierenden Materials auf das absolut benötigte Minimum beschränkt werden kann, wodurch Material- und Herstellungskosten für das feuchteadsorbierende Material reduziert werden können. Des weiteren ergibt sich der Vorteil, daß auch die für das feuchteadsorbierende Material zwischen der Schutzkappe und der Seitenfläche benötigte Volumen auf ein Minimum beschränkt wird, wodurch das Verhältnis der Kondensatorkapazität zum Kondensatorvolumen und damit die Volumenausnutzung des Kondensators weiter verbessert wird.

Es ist des weiteren besonders vorteilhaft, die erfindungsgemäßen Maßnahmen zur Reduktion der Feuchteempfindlichkeit eines Kondensators miteinander zu kombinieren. Bei einem Kondensator mit einem Flach- oder Rundwickel kommt es insbesondere in Betracht, die durch Verschließen ihrer Poren feuchtedicht gemachte Metallschicht auf den beiden kreisförmigen Seitenflächen mit einem deckflächenseitigen Teilkondensator geringer Kapazität an der gekrümmten Außenwand des Wickels zu kombinieren.

Dabei ist es besonders vorteilhaft, wenn die auf einer Seitenfläche des Schichtstapels aufgebrachte Metallschicht mit der die Deckfläche des Schichtstapels bildenden Isolierschicht feuchtedicht verbunden ist. Durch diese feuchtedichte Verbindung wird auch an den Kanten des Schichtstapels das Eindringen von Feuchte wirksam reduziert, wodurch die Feuchteempfindlichkeit des Kondensators weiter verbessert wird. Eine solche feuchtedichte Verbindung zwischen Metallschicht und deckflächenseitiger Isolierschicht ist beispielsweise durch Schoopen aber auch durch Kleben oder Verlöten zu realisieren.

Bei einem Kondensator mit einem Schichtwickel ist es darüber hinaus besonders vorteilhaft, die beiden nicht von der feuchtedicht gemachten Metallschicht bedeckten Seitenflächen mit einer gemeinsamen, aus den Isolierschichten gebildeten feuchtehemmenden Randschicht zu versehen. Dadurch werden die in den Ansprüchen 1 bis 3 genannten Maßnahmen in idealer Weise miteinander kombiniert, so daß eine optimale Verbesserung der Feuchteempfindlichkeit des erfindungsgemäßen Kondensators erreicht werden kann.

Die Erfindung gibt ferner ein Verfahren an zur Herstellung eines Kondensators mit folgenden Schritten:
a) Aufwickeln eines metallisierten Kunststoffbandes auf einen Wickeldorn zu einem Wickel
b) Auftrennen des Wickels zur Bildung von Schichtstapeln aus übereinander liegenden Kunststoff- und Metallschichten. Das Auftrennen des Wickels erfolgt entlang von im wesentlichen senkrecht zu den Kunststoffschichten verlaufenden Ebenen unter Verwendung eines Säge- oder Trennschmelzverfahrens.

Während des Säge- bzw. Trennschmelzens werden die Kunststoffschichten aufgetrennt und durch die auftretende Hitze in einer Randzone gleichzeitig isoliert und mit der jeweiligen darüber- bzw. darunterliegenden Kunststoffschicht verschmolzen. Dadurch entsteht eine aus den Kunststoffschichten gebildete gemeinsame feuchtehemmende Randschicht. Die beim Säge-bzw. Trennschmelzverfahren auftretende Hitze resultiert im wesentlichen aus einem schnell rotierenden, kreissägeartigen Sägeblatt oder einem erhitzten Trennmesser. Diese Hitze erzeugt eine Schmelze, die während des Sägens gewissermaßen als Bugwelle vor der Säge herläuft und die Kunststoffschichten miteinander verschmilzt.

Das erfindungsgemäße Verfahren zur Herstellung des Kondensators hat den Vorteil, daß das Auftrennen des Wickels, das Isolieren der Randzonen und das Verschmelzen der Kunststoffschichten in einem Arbeitsschritt geschieht, wodurch das Verfahren besonders wirtschaftlich und zeitsparend ist.

Falls für besonders hohe Anforderungen an die Feuchtestabilität eines Kondensators eine besonders breite, aus miteinander verschmolzenen Kunststoffschichten bestehende Randzone gewünscht wird, kann das erfindungsgemäße Verfahren dahingehend verbessert werden, daß während des Aufwickelns des metallisierten Kunststoffbandes auf den Wickeldorn durch Laserverdampfen oder Funkenerosion an den für das Auftrennen des Wikkels vorgesehenen Stellen ein ca. 5 mm - 15 mm breiter Streifen entmetallisiert wird. Auf die Breite des entmetallisierten Streifens kann dann die Breite der durch Verschmelzen der Kunststoffschichten gebildeten Randzone vergrößert werden.

Da eine so breite verschmolzene Randzone mit Hilfe des Säge-schmelzverfahrens möglicherweise nicht mehr hergestellt werden kann, ist es besonders vorteilhaft, nach dem Auftrennen des Wickels die Kunststoffschichten durch das Anwenden von Hitze zusätzlich auf die gewünschte Breite der feuchtehemmenden Randschicht zu verschmelzen.

Ferner gibt die Erfindung ein Verfahren zur Herstellung eines erfindungsgemäßen Kondensators an, wobei die Metallschicht durch Reiben, Walzen oder Reiblöten feuchtedicht gemacht wird. Ein solches Verfahren ist besonders vorteilhaft, wenn es unter Einwirkung von Hitze durchgeführt wird, weil dann die Metallschicht etwas aufgeweicht wird und das Verschließen der Poren noch besser gelingt.

Im Folgenden wird die Erfindung anhand von Ausführungsbeispielen und den dazugehörigen Figuren näher erläutert.

Figur 1A zeigt beispielhaft einen erfindungsgemäßen Kondensator im schematischen Querschnitt.

Figur 1B zeigt den Schnitt AB des in Figur 1A dargestellten Kondensators.

Figur 2 zeigt beispielhaft einen weiteren erfindungsgemäßen Kondensator mit einer zusätzlichen Schutzkappe im schematischen Querschnitt.

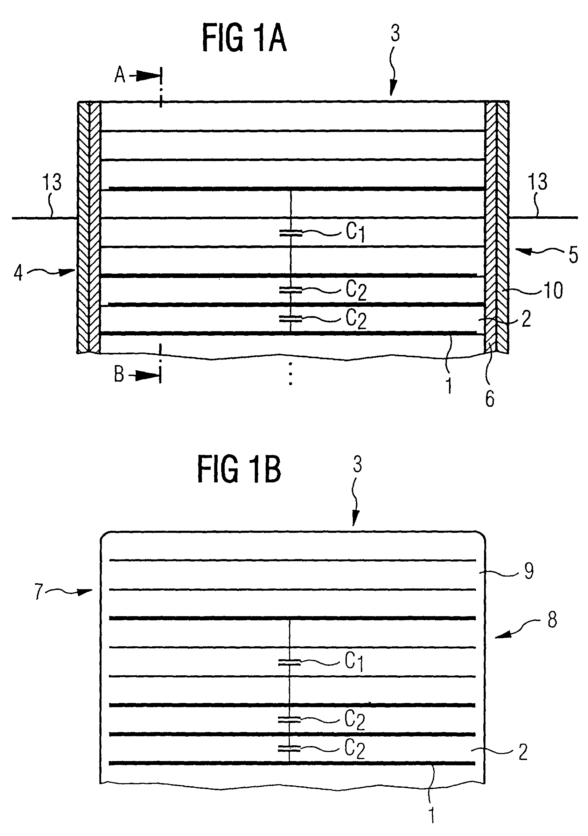

Figur 1A zeigt einen Kondensator mit einem Schichtstapel aus Elektrodenschichten 1 und Isolierschichten 2. Die Elektrodenschichten 1 weisen eine Dicke von ca. 20 nm auf, während die Isolierschichten etwa 1,5 bis 15 *µ*m dick sind. Der Schichtstapel weist eine Deckfläche 3 und zwei Seitenflächen 4, 5 auf. Die Seitenflächen sind jeweils mit einer aufgesprühten Metallschicht 6 (Schoopschicht) versehen; diese Metallschicht 6 kontaktiert jede zweite der übereinander liegenden Elektrodenschichten 1, wobei die Metallschichten 6 jeweils unterschiedliche Elektrodenschichten 1 kontaktieren. Dadurch wird erreicht, daß eine Parallelschaltung der durch die Elektrodenschichten 1 gebildeten Teilkondensatoren C₁, C₂ gebildet wird, wodurch die Kapazitäten der Teilkondensatoren C₁, C₂ zur Bildung der Kapazität des Kondensators addiert werden.

Die Metallschicht ist typischerweise sehr viel dicker als 0,1 mm und kann beispielsweise aus Kupfer, Aluminium, Zink oder auch Legierungen bzw. Schichtungen davon bestehen. Die Länge des in Figur 1A dargestellten Kondensators beträgt typischerweise 100 bis 300 mm; die Höhe des Kondensators beträgt typischerweise 10 bis 40 mm und die Breite 10 bis 175 mm.

Die Poren der Metallschicht 6 sind jeweils durch eine auf der Metallschicht 6 vollflächig aufgebrachten Lotschicht 10 verschlossen. Mittels der Lotschicht 10 können auch gleichzeitig die Kondensatoranschlüsse 13 an den Kondensator gelötet werden. Die Lotschicht 10 verschließt die Poren der Metallschicht 6, wodurch die Metallschicht 6 keine Feuchte mehr durchläßt.

Auf der Seite der Deckfläche 3 weist der Kondensator drei übereinanderliegende Isolierschichten 2 auf. Durch diese Isolierschichten 2 wird erreicht, daß die Feuchte einen bestimmten Anfangsdiffusionsweg zurücklegen muß, bis sie den ersten (allerdings nur wenig) zur Kapazität des Kondensators beitragenden Teilkondensator C₁ erreicht.

Die Elektrodenschichten 1 des deckflächenseitigen Teilkondensators C₁ sind durch drei übereinanderliegende Isolierschichten 2 voneinander getrennt. Dies bedeutet, daß die Kapazität des deckflächenseitigen Teilkondensators C₁ wesentlich geringer ist als die Kapazität der im Innern des Schichtstapels befindlichen Teilkondensatoren C₂.

Wird nun im Laufe der Zeit durch Eindringen der Feuchte die Kapazität des deckflächenseitigen Teilkondensators C₁, beispielsweise aufgrund von Korrosion der Elektrodenschichten 1, reduziert, so fällt dies aufgrund der geringen Kapazität des deckflächenseitigen Teilkondensators C₁ kaum ins Gewicht, wodurch die Feuchtestabilität des in Figur 1A dargestellten Kondensators verbessert wurde.

Wie aus Figur 1B hervorgeht, weist der in Figur 1A dargestellte Kondensator zwei weitere Seitenflächen 7, 8 auf. Die Isolierschichten 2 des Kondensators sind entlang dieser Seitenflächen zu gemeinsamen feuchtehemmenden Randschichten 9 verschmolzen. Die Dicke dieser Randschicht 9 beträgt etwa 0,1 bis 0,5 mm. Dadurch wird erreicht, daß auch von den Seitenflächen 7, 8 kaum noch Feuchte in das Innere des Kondensators eindringen kann.

Die Länge der Elektrodenschicht 1 ist gegenüber der typischen Länge des in Figur 1B dargestellten Kondensators von etwa 100 bis 300 mm verkürzt, was durch Entmetallisieren der darunterliegenden Isolierschicht 2 erreicht wurde. Durch dieses Entmetallisieren wäre es möglich, die Randschicht 9 durch zusätzliches Verschmelzen von Isolierschichten 2 noch weiter in das Innere des Kondensators auszudehnen, wodurch die Feuchtedurchlässigkeit weiter verringert werden könnte.

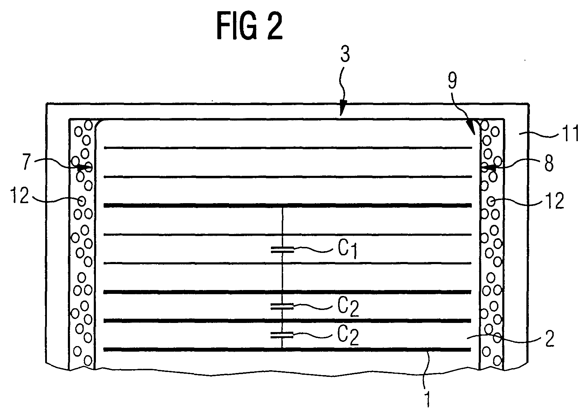

Der in Figur 2 dargestellte Kondensator weist zusätzlich zu dem in Figur 1B dargestellten Kondensator noch eine Schutzkappe 11 auf. Diese Schutzkappe 11 stellt einen zusätzlichen Schutz der Seitenflächen 7, 8 des Kondensators vor Feuchte dar. Um die Feuchtestabilität des Kondensators weiter zu verbessern, kann zwischen der Schutzkappe 11 und der Seitenfläche 8 des Kondensators ein feuchteadsorbierendes Material 12, wie beispielsweise Molekularsiebgranulat, eingefüllt werden.

Der in Figur 1 bzw. in Figur 2 dargestellte Kondensator kann selbstverständlich je nach Bedarf mit den bekannten Umhülltechniken, wie beispielsweise Umgießen mit oder ohne verlorene Form, Eintauchen in Harz, Umsintern, Umschrumpfen oder auch im Skin-Pack-Verfahren behandelt werden.

Des weiteren kann zur Verbesserung der Korrosionsbeständigkeit der Elektrodenschichten eine Folie aus Polyethylenterephthalat, die mit einer Aluminium-Kupfer-Metallisierung versehen ist, als Elektroden- bzw. Isolierschicht verwendet werden.

Die Erfindung beschränkt sich nicht auf die dargestellten Ausführungsbeispiele, sondern wird in ihrer allgemeinsten Form durch die Patentansprüche 1, 2, 3 und 35 definiert.

## Patentansprüche

1. Kondensator mit einem Schichtstapel aus übereinanderliegenden Elektrodenschichten (1) und Isolierschichten (2),
- bei dem der Schichtstapel eine Deckfläche (3) und Seitenflächen (4, 5) aufweist,
- bei dem auf einer Seitenfläche (4, 5) zur Kontaktierung von Elektrodenschichten (1) eine poröse Metallschicht (6) aufgebracht ist und
- bei dem die Metallschicht (6) durch Verschließen ihrer Poren feuchtedicht gemacht ist.

2. Kondensator mit einem Schichtstapel aus parallel geschalteten, übereinanderliegenden Teilkondensatoren aus durch eine Isolierschicht (2) voneinander getrennten Elektrodenschichten (1),
- bei dem der Schichtstapel eine Deckfläche (3) und Seitenflächen (4, 5) aufweist und
- bei dem der deckflächenseitige Teilkondensator (C₁) einen wenigstens zweimal größeren Abstand seiner Elektrodenschichten (1) aufweist als ein Teilkondensator (C₂) im Innern des Schichtstapels.

3. Kondensator mit einem Schichtstapel aus übereinanderliegenden Elektrodenschichten (1) und Isolierschichten (2),
- bei dem der Schichtstapel eine Deckfläche (3) und Seitenflächen (7, 8) aufweist und
- bei dem die Isolierschichten (2) entlang einer Seitenfläche (7, 8) zu einer gemeinsamen, feuchtehemmenden Randschicht (9) vereint sind.

4. Kondensator nach Anspruch 1, 2 oder 3,
der die Merkmale von wenigstens zwei der Ansprüche aufweist.

5. Kondensator nach Anspruch 1 oder 4,
bei dem die Metallschicht (6) vollflächig mit einer Lotschicht (10) versehen ist.

6. Kondensator nach Anspruch 1 oder 4 bis 5,
bei dem die Poren der Metallschicht (6) durch Walzen oder Reiben dicht verschlossen sind.

7. Kondensator nach Anspruch 6,
bei dem die Poren der Metallschicht (6) durch Walzen oder Reiben unter Einwirkung von Hitze dicht verschlossen sind.

8. Kondensator nach Anspruch 5,
bei dem die Metallschicht (6) ein Imprägniermittel im Innern des Kondensators einschließt.

9. Kondensator nach Anspruch 5 oder 8,
bei dem die Lotschicht (10) durch Schwallöten oder durch ein Reiblötverfahren aufgebracht ist.

10. Kondensator nach Anspruch 7 oder 9,
bei dem die Isolierschichten (2) beständig sind gegenüber der beim Verschließen der Poren der Metallschicht (6) auftretenden Hitze.

11. Kondensator nach Anspruch 10,
bei dem die Isolierschichten (2) aus Polyethylenterephthalat, Polypropylenesulfid, Syndiotactic Polystyrene oder thermisch stabilisiertes Polypropylene bestehen.

12. Kondensator nach Anspruch 8,
bei dem das Imprägniermittel ein Gas ist.

13. Kondensator nach Anspruch 8,
bei dem das Imprägniermittel eine Flüssigkeit ist.

14. Kondensator nach Anspruch 8,
bei dem das Imprägniermittel ein Feststoff ist.

15. Kondensator nach Anspruch 2 oder 4,
bei dem die Isolierschicht (2) des deckflächenseitigen Teilkondensators (C₁) wenigstens zweimal so dick ist wie die Isolierschicht (2) eines Teilkondensators (C₂) im Innern des Schichtstapels.

16. Kondensator nach Anspruch 2 oder 4,
bei dem die Elektrodenschichten (1) des deckflächenseitigen Teilkondensators (C₁) durch mehrere Isolierschichten (2) voneinander getrennt sind.

17. Kondensator nach Anspruch 15,
bei dem der deckflächenseitige Teilkondensator (C₁) ein geklebter Verbund aus Kunststoff- und Metallfolie ist.

18. Kondensator nach Anspruch 16,
bei dem die Isolierschichten (2) metallisierte Kunststoffschichten sind und bei dem die Elektrodenschichten (1) des deckflächenseitigen Teilkondensators (C₁) durch mehrere entmetallisierte Isolierschichten (2) voneinander getrennt sind.

19. Kondensator nach Anspruch 18,
bei dem die entmetallisierten Isolierschichten (2) durch Funkenerosion oder Laserverdampfen aus metallisierten Kunststoffschichten hergestellt sind.

20. Kondensator nach Anspruch 18 bis 19,
bei dem zwischen der Deckfläche (3) des Schichtstapels und dem deckflächenseitigen Teilkondensator (C₁) weitere entmetallisierte Isolierschichten (2) angeordnet sind.

21. Kondensator nach Anspruch 20,
bei dem auf einer Seitenfläche (4, 5) des Schichtstapels zur Kontaktierung von Elektrodenschichten (1) eine Metallschicht (6) aufgebracht ist, die mit der die Deckfläche (3) des Schichtstapels bildenden Isolierschicht (2) feuchtedicht verbunden ist.

22. Kondensator nach Anspruch 21,
bei dem die Metallschicht (6) mit der die Deckfläche (3) des Schichtstapels bildenden Isolierschicht (2) durch Kleben oder Verlöten feuchtedicht verbunden ist.

23. Kondensator nach Anspruch 3 oder 4,
bei dem die Isolierschichten (2) durch Verschmelzen zu einer feuchtehemmenden Randschicht (9) vereint sind.

24. Kondensator nach Anspruch 23,
bei dem die Isolierschichten (2) metallisierte Kunststoffschichten sind, die im Bereich der Randschicht (9) entmetallisiert sind.

25. Kondensator nach Anspruch 24,
bei dem die Randschicht (9) eine Dicke zwischen 2 und 15 mm aufweist.

26. Kondensator nach Anspruch 24 bis 25,
bei dem die entmetallisierten Isolierschichten (2) durch Funkenerosion oder Laserverdampfen aus metallisierten Kunststoffschichten hergestellt sind.

27. Kondensator nach Anspruch 1 bis 26,
bei dem eine Seitenfläche (7, 8) des Schichtstapels von einer feuchtehemmenden Schutzkappe (11) abgedeckt ist.

28. Kondensator nach Anspruch 27,
bei dem die Schutzkappe (11) eine Metallschicht aufweist.

29. Kondensator nach Anspruch 28,
bei dem die Schutzkappe (11) ein Verbund aus Kunststoff-und Metallfolien ist.

30. Kondensator nach Anspruch 27 bis 29,
bei dem die Schutzkappe (11) mehrere übereinanderliegende, versetzt angeordnete Schutzschichten aufweist.

31. Kondensator nach Anspruch 27 bis 30,
bei dem zwischen der Schutzkappe (11) und der Seitenfläche (7, 8) ein feuchteadsorbierendes Material (12) angeordnet ist.

32. Kondensator nach Anspruch 31,
bei dem das feuchteadsorbierende Material (12) aus Zeolithen besteht.

33. Kondensator nach Anspruch 32,
bei dem das feuchteadsorbierende Material (12) den gesamten Raum zwischen Schutzkappe (11) und Seitenfläche (7, 8) ausfüllt.

34. Kondensator nach Anspruch 31 bis 33,
bei dem das feuchteadsorbierende Material (12) in seiner Menge so bemessen ist, daß es geeignet ist, die zu erwartende, im Laufe der Lebensdauer des Kondensators in den Kondensator eindringende Feuchte einzulagern.

35. Verfahren zur Herstellung eines Kondensators nach Anspruch 2 mit folgenden Schritten:
a) Aufwickeln eines metallisierten Kunststoffbandes auf einen Wickeldorn zu einem Wickel
b) Auftrennen des Wickels zu Schichtstapeln aus übereinanderliegenden Kunststoff (2)- und Metallschichten (1) entlang von im wesentlichen senkrecht zu den Kunststoffschichten (2) verlaufenden Ebenen in einem Säge- oder Trennschmelzverfahren, wobei die Kunststoffschichten (2) während des Auftrennens durch die auftretende Hitze in einer Randzone gleichzeitig isoliert und mit der jeweiligen darüber- bzw. darunterliegenden Kunststoffschicht (2) zu einer gemeinsamen, feuchtehemmenden Randschicht (9) verschmolzen werden.

36. Verfahren nach Anspruch 35,
bei dem während des Aufwickeins des metallisierten Kunststoffbandes auf den Wickeldorn durch Laserverdampfen oder Funkenerosion an den aufzutrennenden Stellen ein 5 bis 15 mm breiter Streifen entmetallisiert wird.

37. Verfahren nach Anspruch 36,
wobei nach dem Auftrennen des Wickels die Kunststoffschichten (2) im entmetallisierten Bereich zusätzlich verschmolzen werden.

38. Verfahren zur Herstellung eines Kondensators nach Anspruch 1, wobei die Metallschicht durch Reiben, Walzen oder Reiblöten feuchtedicht gemacht wird.

39. Verfahren nach Anspruch 38,
das bei erhöhten Temperaturen durchgeführt wird.
